# EUROPÄISCHE PATENTSCHRIFT

(11) **EP 1 120 323 B1**
(45) Veröffentlichungstag und Bekanntmachung des Hinweises auf die Patenterteilung: **06.10.2004**
(21) Anmeldenummer: 00127780.5
(22) Anmeldetag: 19.12.2000
(51) Int. Cl.: B60T 8/44, B60T 13/66, B60T 13/18

(54) **Bremsanlage für Kraftfahrzeuge**
Braking system for motor vehicles
Système de freinage pour véhicules automobiles

(30) Priorität: 26.01.2000 DE 10003123
(43) Veröffentlichungstag der Anmeldung: 01.08.2001
(73) Patentinhaber: Bayerische Motoren Werke Aktiengesellschaft, 80809 München (DE)
(72) Erfinder: Unterforsthuber, Jakob, 82216 Maisach (DE)

(56) Entgegenhaltungen:
- EP-A- 0 485 367
- EP-A- 0 906 859
- WO-A-99/30944
- DE-A- 4 000 324
- DE-A- 19 501 760
- DE-C- 19 644 880

## Beschreibung

Die Erfindung bezieht sich auf eine Bremsanlage für Kraftfahrzeuge, nach dem Oberbegriff des Patentanspruchs 1.

Eine derartige Bremsanlage für Kraftfahrzeuge ist beispielsweise aus der DE 40 00 324 A1 bekannt. Hierbei wird mittels eines Hydraulikaggregats (HE) in eine Bremsanlage ein zusätzliches Bremsflüssigkeitsvolumen eingespeist, wenn das Bremsflüssigkeitsvolumen im Tandem-Hauptbremszylinder für die Durchführung der vom Fahrer beabsichtigten Verzögerung nicht ausreicht. Zur Erkennung der Notwendigkeit eines zusätzlichen Bremsflüssigkeitsvolumens werden einige Sensoren vorgesehen, wie z. B. ein Bremspedalwegsensor und ein Differenzdruckschalter zwischen den zwei mit dem Hauptbremszylinder verbundenen Radbremskreisen. Die Verwendung von Sensoren erhöht jedoch die Kosten und die Ausfallwahrscheinlichkeit der Bremsanlage. Weiterhin sind aufwendige Fehlerüberwachungs- und Notfallroutinen vorzusehen.

Weiterhin ist aus der EP 0 906 859 A1 eine Bremsanlage zur sogenannten Panikbremsunterstützung bekannt, die eine Optimierung im Hinblick auf einen vermuteten Fahrerwunsch vorsieht.

Es ist daher Aufgabe der Erfindung, eine Bremsanlage eingangs genannter Art derart zu verbessern, dass auf zusätzliche Sensoren verzichtet werden kann und dennoch auch bei kleinerer Auslegung vom Hauptbremszylinder und/oder vom Bremskraftverstärker eine Vollverzögerung, insbesondere bei Extrembelastungen der Bremsanlage, gewährleistet werden kann.

Diese Aufgabe wird durch die Merkmale des Patentanspruchs 1 gelöst. Vorteilhafte Weiterbildungen der Erfindung sind die Gegenstände der abhängigen Ansprüche.

Bei der erfindungsgemäßen Bremsanlage wird im Wesentlichen unabhängig von der Betätigung des Bremspedals dem Radbremskreis zusätzliches Bremsflüssigkeitsvolumen zugeführt, wenn ein vorgegebener Belastungsgrad erreicht oder überschritten wird und die Ist-Verzögerung eine vorgegebene Verzögerungsschwelle erreicht oder überschritten hat. Dabei wird vorzugsweise eine Bremsanlage für Bremsregelsysteme verwendet, die die hierfür notwendigen Vorrichtungen, wie z. B. eine steuerbare Hydraulikpumpe im Radbremskreis, bereits enthalten.

Die Mittel zur Erfassung des Belastungsgrades und die Mittel zur Erfassung der vom Fahrer über das Brempedal eingeleiteten Ist-Verzögerung sind vorzugsweise in ein für Bremsanlagen ohnehin vorhandenes elektronisches Steuergerät in Form von Hardwareschaltungen und/oder Softwareroutinen integriert.

Der Belastungsgrad kann auf unterschiedliche Weise und abhängig von unterschiedlichen, dem Steuergerät zur Verfügung stehenden Betriebsparametem über Rechenmodelle erfasst werden. Im einfachsten Fall entspricht der Belastungsgrad einer Radbremstemperatur, die mittels eines Temperaturmodells abhängig von der Ausgangs-Geschwindigkeit, der Ist-Verzögerung und der Bremszeit berechnet werden kann. Auch die von der Bremstemperatur abhängige Reibwertabnahme kann hierbei berücksichtigt werden. Bei der Erfassung des Belastungsgrades kann aber über eine Langzeitbetrachtung auch der Zustand der Bremsbeläge, insbesondere der radiale und tangentiale Schrägverschleiß, berücksichtigt werden.

Der Bremsbelastungsgrad wird vorzugsweise auch von fahrzeugabhängigen Größen, wie z. B. vom Gewicht, von den Radbremsdimensionen, von den Kühlverhältnissen, vom Luft- und Rollwiderstand sowie von der Motorleistung und der Motorcharakteristik (Beschleunigungsvermögen und Endgeschwindigkeit) bestimmt. Die fahrzeugabhängigen Größen werden z. B. in Form eines fahrzeugimmanenten Bremsbelastungskoeffizienten im Steuergerät abgespeichert.

Die vom Fahrer über das Bremspedal eingeleiteten Ist-Verzögerung wird beispielsweise über die Raddrehzahlsensoren erfasst, wenn eine Bremsanlage mit Bremsregelsystem verwendet wird.

Für die Zufuhr des zusätzlichen Bremsflüssigkeitsvolumens sind besonders die bekannten Fahrstabilitätsregelsysteme (ESP oder DSC) geeignet, da sie ohne mechanischen Zusatzaufwand alle Voraussetzungen für die praktische Umsetzung der Erfindung erfüllen. Diese Voraussetzungen sind im Einzelnen:
- Raddrehzahlsensoren zur Erfassung der Beschleunigung bzw. Verzögerung,
- eine Hydraulikpumpe, mit deren Hilfe das Bremsflüssigkeitsvolumen direkt aus dem Ausgleichsbehälter oder über den Hauptbremszylinder angesaugt und in die Radbremsen eingespeist werden kann,
- Ventile, die den Aufbau des Bremdruckes in den Radbremsen unabhängig von der Betätigung des Bremspedals ermöglichen und
- ein elektronisches Steuergerät, in das die Verfahrensanteile (z. B. Sensorsignalerfassung, Rechenmodelle, Speicher, Programmschritte, Aktuatoransteuerung) der erfindungsgemäßen Bremsanlage integriert werden können.

Die Vorgabe der Verzögerungsschwelle richtet sich erfindungsgemäß dabei nach der maximal möglichen Verzögerung, die sich aufgrund der Auslegung des Hauptbremszylinders, insbesondere durch dessen maximal mögliches Abgabevolumen, und gegebenenfalls aufgrund der Auslegung des Bremskraftverstärkers, insbesondere durch dessen Aussteuerpunkt und dem damit verbundenen maximal möglichen Leitungsdruck bzw. Radbremsdruck, ergibt.

Die vorgegebene Verzögerungsschwelle wird vorzugsweise variabel, nämlich umgekehrt proportional zum erfassten Belastungsgrad definiert; d.h. die Verzögerungsschwelle sinkt mit steigendem Belastungsgrad.

Weiterhin wird die vorgegebene Verzögerungsschwelle vorzugsweise abhängig vom maximal möglichen Bremsflüssigkeitsvolumen definiert. Das maximal mögliche Bremsflüssigkeitsvolumen ergibt sich aufgrund der Auslegung des Hauptbremszylinders und entspricht seinem maximal möglichen Abgabevolumen, das insbesondere durch den Hub bzw. die Länge und die Kolbenfläche des Hauptbremszylinders fest vorgegeben wird. Durch die Erfindung kann der Hauptbremszylinder kleiner als normal ausgelegt werden (vgl. hierzu auch DE 40 00 324 A1).

Auch wird die vorgegebene Verzögerungsschwelle vorzugsweise abhängig vom maximal möglichen Bremsdruck definiert, der sich aufgrund der Auslegung des Bremskraftverstärkers insbesondere durch die Lage des Aussteuerpunktes ergibt, da oberhalb des Aussteuerpunktes eine weitere Zunahme des Leitungsdruckes nur mit sehr großer Kraftsteigerung möglich ist. Zur Vereinfachung wird deshalb im Folgenden der Druck im Aussteuerpunkt mit dem maximal möglichen Bremsdruck gleichgesetzt.

Besonders vorteilhaft ist die Abstimmung des maximal möglichen Bremsdruckes und des maximal möglichen Bremsflüssigkeitsvolumens aufeinander, da sie sich gegenseitig beeinflussen. Dazu wird die Bremsanlage im Hinblick auf die Auslegung des Hauptbremszylinders und des Bremskraftverstärkers derart ausgelegt ist, dass sich bei Vorliegen des durch den Hauptbremszylinder festgelegten maximal möglichen Bremsflüssigkeitsvolumens und des durch den Bremskraftverstärker festgelegten maximal möglichen Bremsdruckes zumindest für einen vorgegebenen Belastungszustand die gleiche maximal mögliche Verzögerung ergibt.

Bei Verwendung von Bremsregelsystemen greift die Erfindung nur dann ein, wenn gerade kein Bremsregeleingriff vorliegt. Das zusätzliche Bremsflüssigkeitsvolumen kann Zeit- oder Volumenmengen- oder Ereignis-gesteuert zugeführt werden. Vorzugsweise wird das zusätzliche Bremsflüssigkeitsvolumen solange zugeführt, bis sich sämtliche Räder im ABS-Modus befinden. Durch diese Ereignissteuerung wird eine auch für einen Vollverzögerungswunsch notwendige Verzögerung sichergestellt.

Durch die Erfindung wird erreicht, dass Hauptbremszylinder und/oder Bremskraftverstärker kleiner als bisher üblich ausgelegt werden können. Bei den Situationen, in denen das Volumen der bisher üblicherweise groß ausgelegten Hauptbremszylinder ausgenutzt wird, handelt es sich fast ausschließlich um Vollverzögerungen im Anschluss an vorausgegangene Extrembelastungen. Derartige Extrembelastungen sind beispielsweise wiederholte Bremsvorgänge mit dazwischenliegenden Beschleunigungsphasen ohne Erholungszeit für die Radbremsen (z. B. gemäß der Bremswegmessungen gemäß der Zeitschrift "Auto Motor und Sport " (Hamburg; Deutschland)) oder auch Hochtemperatur-Fading-Tests. Hochtemperaturfading äußert sich für den Fahrer dahingehend, dass für eine bestimmte Verzögerung eine deutlich höhere Pedalkraft und ein deutlich längerer Pedalweg erforderlich wird als üblicherweise. Diese und andere Extrembelastungen werden durch die erfindungsgemäße Erfassung des Belastungsgrades berücksichtigt.

In der Zeichnung ist ein Ausführungsbeispiel der Erfindung dargestellt. Es zeigen
- Fig. 1: die Abhängigkeit des maximal möglichen Bremsflüssigkeitsvolumens vom Bremsdruck sowie gleichzeitig Linien gleicher maximal möglicher Verzögerungen
- Fig. 2: eine hydraulische Bremsregelanlage, die zur Realisierung der erfindungsgemäßen Bremsanlage verwendet werden kann

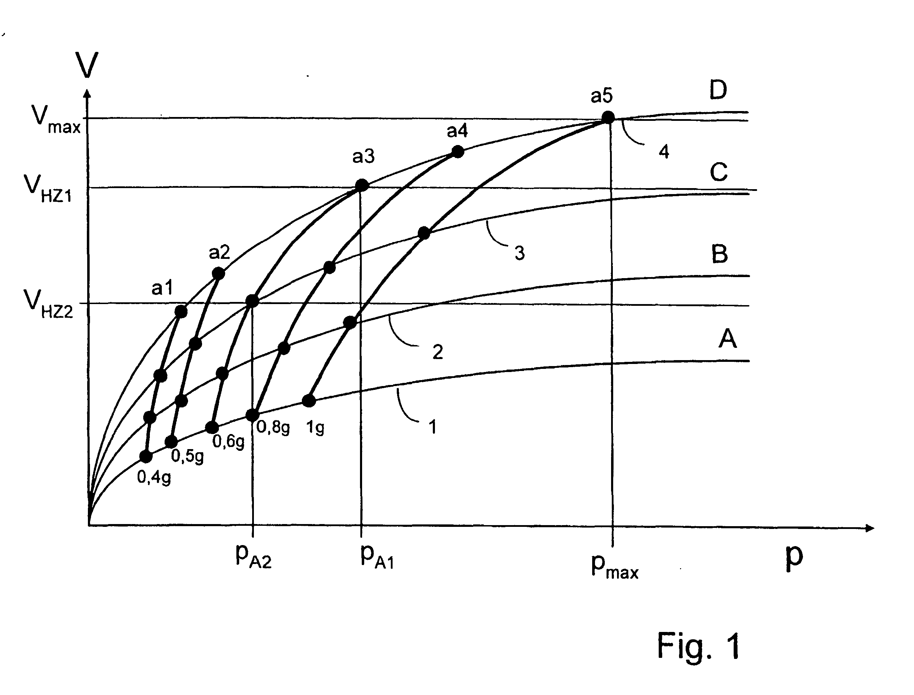

In Fig. 1 ist in einem schematischen Diagramm dargestellt, wie sich abhängig vom Belastungsgrad (A, B, C, D) der Bremsanlage die Volumen-Druck-Kennlinie der Bremsanlage verschiebt. Ergänzend wird daraufhin gewiesen, daß das Spektrum zwischen dem kleinsten definierten Belastungsgrad (hier A) und dem größten definierten Belastungsgrad (hier D) beliebig genau aufgelöst werden kann. Ebenso können auch der kleinste und der größte Belastungsgrad beliebig definiert werden. Auf der Abszisse ist der Bremsdruck, im ff. kurz Druck p genannt, auf der Ordinate ist das Bremsflüssigkeitsvolumen, im ff. kurz Volumen V genannt, aufgetragen. Der Druck p ist bei vorzugsweiser Verwendung einer ohnehin vorhandenen Bremsregelungsanlage der am Hauptbremszylinderausgang in der Hydraulikleitung vorliegende Leitungsdruck, der direkt proportional zur Pedalkraft und gleich dem Bremsdruck in den Radbremszylindern im Nicht-Regelbetrieb ist.

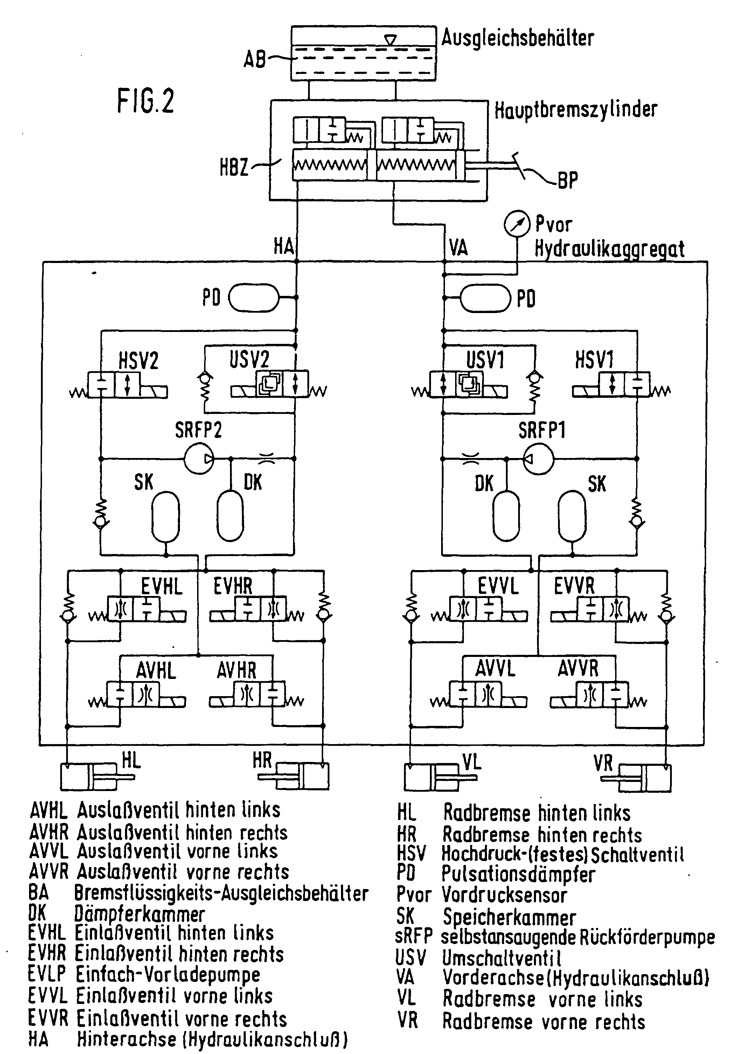

In Fig. 1 sind Beispiele verschiedener Volumen-Druck-Kennlinien 1, 2, 3 und 4 für vier verschiedene Belastungsgrade A, B, C und D dargestellt. Diese Kennlinien 1 bis 4 können beispielsweise in einem Steuergerät für eine Bremsregelungsanlage nach Fig. 2 abgespeichert sein. Im Steuergerät wird mittels Rechenmodellen insbesondere abhängig von der Bremsentemperatur, aber auch von anderen Betriebs- und/oder Fahrzeugparametem der jeweilige Belastungsgrad ermittelt. Weiterhin sind Linien gleicher maximal möglicher Verzögerungen a1 bis a5 abhängig vom Belastungsgrad A bis D abgespeichert. Die Verzögerung a5 soll im dargestellten Beispiel 1g sein und wird hier als Vollverzögerung und damit als stets ausreichende Verzögerung definiert. Die Verzögerungen a1=0,4g, a2=0,6g, a3=0,8g und a4=0,9g sind kleiner als die (möglicherweise angeforderte) Vollverzögerung.

Grundsätzlich wird zusätzliches Volumen V in den Radbremskreis zugeführt, wenn ein vorgegebener Belastungsgrad A, B, C oder D erreicht oder überschritten wird und die Ist-Verzögerung eine vorgegebene Verzögerungsschwelle erreicht oder überschritten hat.

Im folgenden werden Beispiele für unterschiedlich ausgelegte Bremsanlagen beschrieben.

### 1. Beispiel:

Der Hauptbremszylinder der Bremsanlage ist derart ausgelegt, dass ein maximal mögliches Volumen von Vₘₐₓ vorliegt. Der Bremskraftverstärker ist derart ausgelegt, daß ein maximal möglicher Druck von pₘₐₓ aufgebracht werden kann. Die Auslegung dieser Bremsanlage ist derart, dass sie selbst bei höchstem Belastungsgrad D die maximal mögliche Verzögerung von a5=1g ausführen kann. Bei einer derartigen Auslegung der Bremsanlage ist das erfindungsgemäße Zuführen von zusätzlichem Volumen V nicht erforderlich. Ziel der Erfindung ist jedoch, eine derartige mit hohen Kosten und großem Bauraum verbundene Auslegung zu vermeiden.

### 2. Beispiel:

Der Hauptbremszylinder der Bremsanlage ist derart ausgelegt, dass ein maximal mögliches Volumen von V_{HZ1} vorliegt. Der Bremskraftverstärker ist derart ausgelegt, dass ein maximal möglicher Druck von p_{A1} aufgebracht werden kann. Die Auslegung dieser Bremsanlage ist derart, dass sich bei Ausschöpfung des maximal mögliche Bremsflüssigkeitsvolumens V_{HZ1} und des maximal möglichen Bremsdruckes p_{A1} für den Belastungszustand D nur noch eine maximal mögliche Verzögerung von a3=0,6g ergibt. Für das Erreichen einer Vollverzögerung im Belastungszustand D ist daher eine Zufuhr von zusätzlichem Volumen V erforderlich. Daher wird bei dieser Bremsanlage beispielsweise das Erreichen des Belastungsgrades D und der Verzögerungsschwelle von a3 oder einem Wert, der etwas unterhalb von a3 liegt, als Auslösekriterium für die Zufuhr von zusätzlichen Volumen V in den Radbremskreis vorgegeben.

Im Belastungszustand C ist eine Verzögerung von mindestens a4=0,8g möglich. Eine Auslösung für die Zufuhr von zusätzlichem Volumen ist erst bei Überschreiten von a4 notwendig.

### 3. Beispiel:

Der Hauptbremszylinder der Bremsanlage ist derart ausgelegt, dass ein maximal mögliches Volumen von V_{HZ2} vorliegt. Der Bremskraftverstärker ist derart ausgelegt, dass ein maximal möglicher Druck von p_{A2} aufgebracht werden kann. Die Auslegung dieser Bremsanlage ist derart, daß sich bei Ausschöpfung des maximal mögliche Bremsflüssigkeitsvolumens V_{HZ2} und des maximal möglichen Bremsdruckes p_{A2} für den Belastungszustand C die maximal mögliche Verzögerung von a3=0,6g ergibt. Im Belastungszustand D ist bei dieser Bremsanlage nur noch eine maximal mögliche Verzögerung von a1=0,4g erreichbar. Im Belastungszustand B ist bei dieser Bremsanlage noch eine maximal mögliche Verzögerung von 0,7g (zwischen a3 und a4) erreichbar. Im Belastungszustand A ist bei dieser Bremsanlage eine maximal mögliche Verzögerung von a4=0,8g erreichbar. Die Verzögerungsschwellen werden abhängig vom erfassten Belastungsgrad (A, B, C, D) definiert. Für den Belastungsgrad A wird beispielsweise eine Verzögerungsschwelle von 0,8g definiert. Im Belastungszustand B wird eine Verzögerungsschwelle von 0,7g oder vorzugsweise von einem Wert, der etwas unterhalb der maximal möglichen Verzögerung von 0,7g liegt, vorgegeben. Im Belastungszustand C wird eine Verzögerungsschwelle von etwa a3=0,6g oder etwas darunter vorgegeben. Im Belastungszustand D wird eine Verzögerungsschwelle von etwa a1=0,4g oder etwas darunter vorgegeben. Hat die Ist-Verzögerung die jeweilige Verzögerungsschwelle im jeweiligen Belastungszustand zumindest erreicht, wird zusätzliches Volumen V in die Radbremskreise zugeführt.

Betrachtet man die Beispiele 2 und 3 zusammengefasst, werden die Verzögerungsschwellen abhängig vom Belastungszustand (A, B, C, D), dem maximal möglichen Bremsflüssigkeitsvolumen (V_{HZ1}; V_{HZ2}) und vom maximal möglichen Bremsdruck (p_{A1}; p_{A2}) vorgegeben.

Vorzugsweise wird das zusätzliche Bremsflüssigkeitsvolumen V solange zugeführt, bis sich sämtliche Räder im ABS-Modus befinden. Somit wird eine maximal mögliche Verzögerung im Hinblick auf den Reibwert zwischen der Straße und den Fahrzeugrädern durchgeführt. Eine hydraulische Bremsregelanlage, die zur Realisierung dieser erfindungsgemäßen Bremsanlage verwendet werden kann, ist in Fig. 2 dargestellt.

Die Zufuhr von zusätzlichem Volumen V findet nur dann statt, wenn kein Regelbetrieb der Bremsanlage vorliegt. Für die erfindungsgemäße Zufuhr von zusätzlichem Volumen V in die Radbremskreise (über HA und VA) werden die Rückförderpumpen SRFP1 und SRFP2 eingeschaltet. Die Ventile USV1 und USV2 werden geschlossen. Die Ventile HSV1 und HSV2 werden geöffnet.

Ergänzend wird darauf hingewiesen, daß zwischen dem Bremspedal BP und dem Hauptbremszylinder HBZ ein hier nicht dargestellter Bremskraftverstärker vorhanden ist.

Bei der erfindungsgemäßen Zufuhr des zusätzlichen Bremsflüssigkeitvolumens ergeben sich zwei unterschiedliche Situationen (vgl. auch Fig. 2):
1. Das Volumen des Hauptbremszylinders HBZ ist im Moment des Eingriffs noch nicht vollständig erschöpft. Dann saugen die hydraulischen Pumpen SRFP1 und SRFP2 aus dem Hauptbremszylinder HBZ weiter Volumen ab. Der Kolben des Hauptbremszylinders und damit das Bremspedal BP werden nach vorne gezogen. Ohne Kraftsteigerung des Fahrers am Bremspedal tritt eine Vollverzögerung ein.
2. Der Hauptbremszylinder-Kolben ist bereits auf Anschlag bzw. kurz davor. Dann saugen die Pumpen SRFP1 und SRFP2 über die (hier nicht dargestellten) Manschetten des Hauptbremszylinders HBZ weiter Volumen aus dem Ausgleichsbehälter AB nach.

Die zusätzliche Zufuhr des Volumens V kann jedoch auch direkt aus dem Ausgleichsbehälter AB entnommen werden, wenn zwischen dem Ausgleichsbehälter AB und den Bremsleitungen an den Hauptzylinderanschlüssen HA und VA eine Verbindung vorgesehen ist (vgl. z. B. DE 40 00 324 A1).

Das zusätzliche Bremsflüssigkeitsvolumen V wird solange zugeführt, bis sich sämtliche Räder im ABS-Modus befinden. Anschließend werden die Rückförderpumpen SRFP1 und SRFP2 wieder ausgeschaltet. Die Ventile USV1 und USV2 werden geöffnet. Die Ventile HSV1 und HSV2 werden wieder geschlossen.

## Patentansprüche

1. Bremsanlage für Kraftfahrzeuge, mit einem Hauptbremszyilinder (HBZ), der über einen Bremskraftverstärker durch ein vom Fahrer zu betätigendes Bremspedal (BP) betätigt wird, mit einem an den Hauptbremszylinder(HBZ) angeschlossenen Ausgleichsbehälten (AB), mit mindestens einem mit dem Hauptbremszylinder (HBZ) verbundenen Radbremskreis, dem unabhängig von der Betätigung des Bremspedals (BP) zusätztiches Bremsflüssigkeitsvolumen zuführbar ist, und mit einem Steuergerät, **dadurch gekennzeichnet, dass** im Steuergerät Mittel zur Bestimmung eines Belastungsgrades der Bremsanlage abhängig von dem Steuergerät zur Verfügung stehenden Betriebsparametern und Mittel zur Erfassung der vom Fahrer über das Bremspedal (BP) eingeleiteten Ist-Verzögerung vorgesehen sind, und dass zusätzliches Bremsflüssigkeitsvolumen (V) in den Radbremskreis zugeführt wird, wenn das Steuergerät erkennt, dass ein vorgegebener Belastungsgrad (A, B, C, D) erreicht oder überschritten wird und die Ist-Verzögerung eine vorgegebene Verzögerungsschwelle erreicht oder überschritten hat, wobei die Vorgabe der Verzögerungsschwelle sich zumindest nach einer maximal möglichen Verzögerung (HBZ) richtet, die sich aufgrund der Auslegung des Hauptbremszylinders ergibt.

2. Bremsanlage nach Patentanspruch 1, **dadurch gekennzeichnet, dass** die vorgegebene Verzögerungsschwelle abhängig vom erfassten Belastungsgrad (A, B, C, D) definiert wird.

3. Bremsanlage nach Patentanspruch 1 oder 2, **dadurch gekennzeichnet, dass** die vorgegebene Verzögerungsschwelle abhängig vom maximal möglichen Bremsflüssigkeitsvolumen (Vₘₐₓ; V_{HZ1}; V_{HZ2}) definiert wird.

4. Bremsanlage nach einem der Patentansprüche 1 bis 3, **dadurch gekennzeichnet, dass** die vorgegebene Verzögerungsschwelle abhängig vom maximal möglichen Bremsdruck (pₘₐₓ; p_{A1}; p_{A2}) definiert wird.

5. Bremsanlage nach einem der Patentansprüche 1 bis 4, **dadurch gekennzeichnet, dass** die Bremsanlage im Hinblick auf die Auslegung des Hauptbremszylinders und des Bremskraftverstärkers derart ausgelegt ist, dass sich bei Ausschöpfung des maximal möglichen Bremsflüssigkeitsvolumens ( V_{HZ1}; V_{HZ2}) und des maximal möglichen Bremsdruckes (p_{A1}; p_{A2}) zumindest für einen vorgegebenen Belastungszustand (D; C), vorzugsweise für den höchsten Belastungsgrad (D), die gleiche maximal mögliche Verzögerung (a3; a3) ergibt.

## Claims

1. Braking system for motor vehicles, comprising a master braking cylinder (HBZ) which is actuated via a power brake by a brake pedal (BP) to be actuated by the driver, a brake fluid reservoir (AB) connected to the master braking cylinder (HBZ), at least one wheel braking circuit connected to the master braking cylinder (HBZ) and to which an additional braking fluid volume can be fed independently of the actuation of the brake pedal (BP), and comprising a control device, **characterised in that** provided in the control device are means for determining a degree of loading of the braking system as a function of operating parameters available to the control device, and means for detecting the actual deceleration introduced by the driver via the brake pedal (BP), and **in that** an additional brake fluid volume (V) is fed into the wheel braking circuit when the control device detects that a preset degree of loading (A, B, C, D) is reached or exceeded and the actual deceleration has reached or exceeded a preset deceleration threshold, the selection of the deceleration threshold being oriented at least according to a maximum possible deceleration which is produced on the basis of the design of the master braking cylinder (HBZ).

2. Braking system according to claim 1, **characterised in that** the preset deceleration threshold is defined as a function of the detected degree of loading (A, B, C, D).

3. Braking system according to claim 1 or 2, **characterised in that** the preset deceleration threshold is defined as a function of the maximum possible brake fluid volume (Vₘₐₓ; V_{HZ1}; V_{HZ2}).

4. Braking system according to any one of claims 1 to 3, **characterised in that** the preset deceleration threshold is defined as a function of the maximum possible braking pressure (Pₘₐₓ; P_{A1}; P_{A2}).

5. Braking system according to any one of claims 1 to 4, **characterised in that** the braking system is designed with regard to the design of the master braking cylinder and the power brake in such a way that when the maximum possible brake fluid volume (V_{HZ1}; V_{HZ2}) and the maximum possible braking pressure (P_{A1}; P_{A2}) are exhausted, the same maximum possible deceleration (a3; a3) is produced at least for a preset load state (D; C), preferably for the highest degree of loading (D).

## Revendications

1. Système de freinage pour véhicules automobiles, avec un maître-cylindre (HBZ) qui est actionné par l'intermédiaire d'un servofrein au moyen d'une pédale de frein (BP) à actionner par le conducteur, avec un réservoir de compensation (AB) raccordé au maître-cylindre (HBZ), avec au moins un circuit de freinage des roues relié avec le maître-cylindre (HBZ), auquel un volume supplémentaire de liquide de frein peut être amené indépendamment de l'actionnement de la pédale de frein (BP), et avec une unité de commande,
**caractérisé en ce que**
l'unité de commande comporte des moyens de détermination d'un degré de contrainte du système de freinage en fonction des paramètres de service disponibles pour l'unité de commande et des moyens de détection de la décélération réelle engagée par le conducteur au moyen de la pédale de frein (BP), et du volume supplémentaire de liquide de frein (V) est amené dans le circuit de freinage des roues lorsque l'unité de commande détecte qu'un degré de contrainte prédéterminé (A, B, C, D) est atteint ou dépassé et si la décélération réelle a atteint ou dépassé un seuil de décélération prédéterminé, la prédétermination du seuil de décélération dépend au moins d'une décélération maximale possible obtenue en raison de la conception du maître-cylindre (HBZ).

2. Système de freinage selon la revendication 1,
**caractérisé en ce que**
le seuil de décélération prédéterminé est défini en fonction du degré de contrainte détecté (A, B, C, D).

3. Système de freinage selon les revendications 1 et 2,
**caractérisé en ce que**
le seuil de décélération prédéterminé est défini en fonction du volume de liquide de frein possible au maximum (Vₘₐₓ ; V_{HZ1} ; V_{HZ2}).

4. Système de freinage selon l'une des revendications 1 à 3,
**caractérisé en ce que**
le seuil de décélération prédéterminé est défini en fonction de la pression de freinage possible au maximum (Pₘₐₓ ; P_{A1} ; P_{A2}).

5. Système de freinage selon l'une des revendications 1 à 4,
**caractérisé en ce que**
la conception du maître-cylindre et du servofrein permet, en cas d'épuisement du volume de liquide de frein possible au maximum (V_{HZ1} ; V_{HZ2}) et de la pression de freinage possible au maximum (P_{A1} ; P_{A2}), la même décélération possible au maximum (a3 ; a3) au moins pour un état de contrainte prédéterminé (D ; C), de préférence pour le degré de contrainte maximum (D).
